Europäisches Patentamt

European Patent Office

Office européen des brevets

(11) Publication number: **0 181 938**
A1

# EUROPEAN PATENT APPLICATION

published in accordance with Art. 158(3) EPC

(21) Application number: **85902120.6**

(22) Date of filing: **15.04.85**

Data of the international application taken as a basis:

(86) International application number: **PCT/JP 85/00201**

(87) International publication number: **WO 85/04772 (24.10.85 85/23)**

(51) Int. Cl.⁴: **H 02 P 7/36, H 02 P 7/63**

(30) Priority: **14.04.84 JP 73869/84**
**14.04.84 JP 73870/84**

(43) Date of publication of application: **28.05.86**
**Bulletin 86/22**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **KAWADA, Shigeki, 3-30-6, 1119-102, Nakayama, Hachioji-shi Tokyo 194 (JP)**
Inventor: **NAKAMURA, Kousei, 1-2-8, Asahigaoka Hino-shi, Tokyo 191 (JP)**
Inventor: **YOSHIDA, Takashi, Fanuc Hirayama Shataku 2-10-1, Asahigaoka, Hino-shi Tokyo 191 (JP)**

(74) Representative: **Allman, Peter John et al, Marks and Clerk Scottish Life House Bridge Street, Manchester M3 3DP (GB)**

(54) **CONTROLLER FOR AN INDUCTION MOTOR.**

(57) A controller comprises a driving power source (1) of a variable frequency, an induction motor (2) having a plurality of stator windings (21, 22; 23, 24; 25, 26) provided for each of the phases, and semiconductor switches (311, 321, 331; 312, 322, 332; 313, 323, 333) provided for each of the phases to switch the connections among the plurality of stator windings. The number of series conductors of stator windings provided for each of the phases, is changed by said semiconductor switches. This widens the region of constant output characteristics of the induction motor, and makes it possible to carry out the operation up to desired high-speed region.

- 1 -

DESCRIPTION

TITLE OF THE INVENTION

Control Apparatus for Induction Motor

TECHNICAL FIELD

The present invention relates to a control apparatus for an induction motor, especially to a control apparatus which enables driving until the high speed range of about 10,000 rpm using an inverter or other drive power source of a variable frequency, and is used, for example, mounted to the main shaft of a machine tool for control of a cutting operation, etc.

BACKGROUND ART

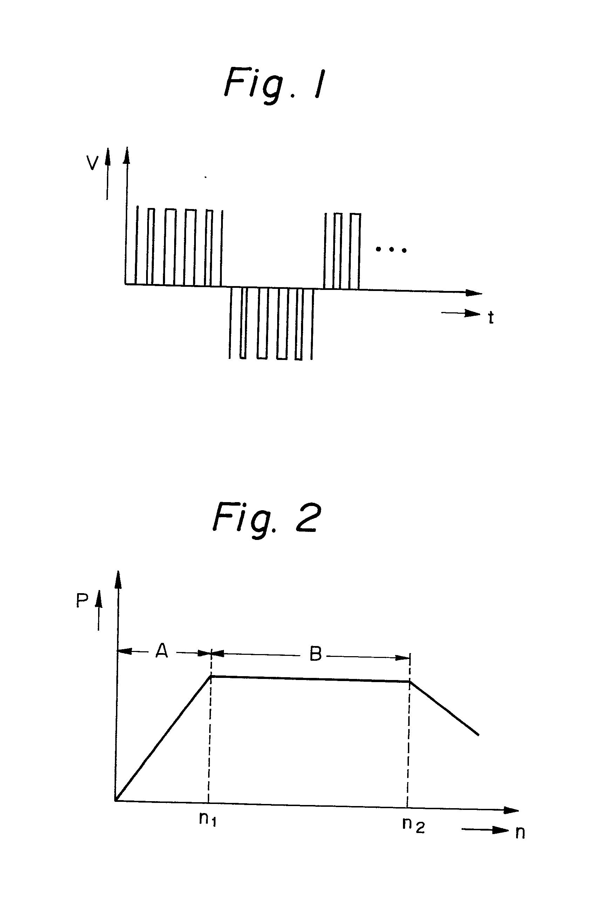

A conventional drive power source used for an induction motor for such a use, is, for example, an inverter which has a waveform of the pulse width modulation type as shown in Fig. 1 and generates an output voltage of variable frequency by the on and off operation of a transistor. This enables driving of the motor in a range of speed of from several tens of rpm to several thousand rpm.

Figure 2 shows the speed-output characteristics of a motor driven by such a variable frequency power source. In the range A, the output P increases roughly proportionally along with the increase of the frequency of the drive power source and rise of the rotational speed n of the motor. In the above range, the magnetic flux $\phi$ per pole and the torque of the motor are almost constant, and the primary induced voltage $E_1$ of the motor, defined by $E_1 = 2.22 K_1 \cdot f \cdot \phi \cdot N_1$ (where, $K_1$ is the winding coefficient, f is the frequency, and $N_1$ is the number of series-connected conductors of the stator winding), increases roughly linearly along with the increase of the power source frequency f.

Thus, when the rotational speed of the motor reaches $n_1$ (for example, 1500 rpm if the motor has four poles and the power source frequency is 50 Hz), the above primary induced voltage $E_1$ reaches the terminal voltage applied to the motor (for example, 200 V), the primary induced voltage $E_1$ not being able to be increased further. Therefore, in the range B wherein the rotational speed of the motor increases to more than the rotational speed $n_1$ , control is effected so as to increase the power source frequency and decrease the magnetic flux $\phi$. When the range B is entered, the torque of the motor decreases along with the rise of the rotational speed, and the output P becomes almost constant in constant output characteristics irrespective of the rise of the rotational speed.

Further, when the rotational speed of the motor exceeds $n_2$ (for example, 4500 rpm when the motor has four poles and the power source frequency is 150 Hz), the degree of the decrease in torque of the motor becomes much more remarkable, and the output P begins to decrease along with a rise of the rotational speed. Therefore, a rotational speed of about 6000 rpm, for example, is the actual upper limit in the range of driving. This can also be explained by the fact that, in the range where the rotational speed exceeds $n_2$ , in the equation representing the output P, i.e.,

$$P = \frac{m_1 \cdot r_2'S(1 - S)V_1^2}{(Sr_1 + r_2')^2 + S^2(X_1 + X_2')^2}$$

Where, $m_1$:   Number of phases,

$r_1$:   Primary resistance,

$r_2'$:   Value of secondary resistance of converted to primary side,

$X_1$:   Primary reactance,

$X_2'$:   Value of the secondary reactance converted to the primary side,

S:   Slippage,

P decreases due to $X_1$ and $X_2'$ increasing along with the increase of the frequency.

In this connection, the rotational speed $n_1$ by

which the speed-output characteristic shifts from range A, i.e., the range where the output increases proportionally to the rotational speed, to range B, i.e., the range where the output becomes constant irrespective of the increase of the rotational speed (namely, the rotational speed when the power source frequency is gradually increased and the primary induced voltage $E_1$ of the motor reaches the terminal voltage applied to the motor, 200 V, for example) is generally called the base speed of the motor. The ratio of the rotational speed $n_1$ to $n_2$ is usually from 1 : 3 to 1 : 4.

However, recently it has been desired that drive sources for such kinds of machine tools be able to produce an output P of a predetermined magnitude and, at the same time, along with improvements in cutter performance, be able to cut at a high speed of, for example, 10,000 rpm or more.

However, the conventional inverter driven induction motor has the speed-output power characteristics as mentioned above. Therefore, there is a problem that the range of region B in which the predetermined output can be obtained is not sufficient to satisfy the demands for the above-mentioned high-speed driving.

DISCLOSURE OF THE INVENTION

An object of the present invention is to enlarge the range of the constant output characteristics and to enable operation up to the desired high speed range based on the idea of changing the base speed in the above-mentioned speed-output characteristics and the range of the region (region B) of the constant output characteristics by changing the number of series-connected conductors of the stator windings provided for each phase of the motor when driving an induction motor by an inverter or other variable frequency power source.

Another object of the present invention is to effectively utilize all of the stator windings irrespective of the state of the switching so as to prevent the fall of the output characteristics.

Still another object of the present invention is enable changing of the number of series-connected conductors in the above stator windings to any ratio and thereby enable operation until the desired high-speed region.

A further object of the present invention is to make the increase of the low-speed torque more remarkable when reducing the speed of the induction motor by gears or the like to increase the low-speed torque.

According to a basic aspect of the present invention, there is provided a control apparatus for an induction motor, characterized by comprising a variable frequency drive power source, an induction motor having a plurality of stator windings provided for each phase, and semiconductor switches for switching the connections between the plurality of stator windings provided for each phase, the number of series-connected conductors of the stator windings provided for each phase being able to be switched by the semiconductor switches.

According to another aspect of the present invention, there is provided a control apparatus for an induction motor characterized by comprising a variable frequency drive power source, an induction motor having a plurality of series-connected stator windings for each phase, transistor switches for exciting all of the windings for connecting the plurality of series-connected stator windings to the drive power source, and transistor switches for exciting a part of the windings for connecting directly only a part of the plurality of stator windings to the drive power source without changing the number of poles in the above-mentioned excitation case for all of the windings, wherein the transistor switches for exciting all of the windings and the transistor switches for exciting a part of the windings are selectively switched.

According to another aspect of the present invention, there is provided a control apparatus for an induction motor, characterized by comprising a variable frequency drive power source, an induction motor having a plurality of stator windings of the same number of turns provided for each phase, transistor switches for parallel excitation for connecting in parallel the plurality of stator windings to the drive power source, and transistor switches for series excitation for connecting in series the plurality of stator windings to the drive power source without changing the number of poles in the above-mentioned parallel connection case, wherein the transistor switches for parallel excitation and the transistor switches for series excitation are selectively switched.

BRIEF DESCRIPTION OF THE DRAWINGS

Figure 1 is a diagram showing an example of a waveform of the output voltage of the variable frequency power source used in the present invention;

Fig. 2 is a diagram showing speed-output characteristics of a conventional induction motor driven by a variable frequency power source;

Fig. 3 is a diagram showing an example of the connections between the stator windings of the motor and the transistor switches as applied to a control apparatus for an induction motor according to one embodiment of the present invention;

Fig. 4 is a diagram explaining the operation of the transistor switch shown in Fig. 3;

Fig. 5a and Fig. 5b are diagrams showing two states of connections of the stator windings resulting from switching the transistor switches shown in Fig. 3;

Fig. 6 is a diagram showing speed-output characteristics of the induction motor shown in Fig. 3;

Fig. 7 is a diagram showing, by enlargement, an example of the state of winding in the stator windings of the induction motor shown in Fig. 3;

Fig. 8 is a diagram showing an example of the state of the real arrangement of the drive power source, the induction motor, and a transistor unit, all of which are used in the apparatus shown in Fig. 3;

Fig. 9a and Fig. 9b are diagrams comparing the low speed torque of the induction motor shown in Fig. 3 to that of the conventional induction motor;

Fig. 10 and 11 are diagrams showing modified examples of the connections between the stator windings of the induction motor and the transistor switches shown in Fig. 3;

Fig. 12 is a diagram showing an example of the connections between the stator windings of the motor and the transistor switches in a control apparatus for an induction motor according to another embodiment of the present invention;

Fig. 13 is a diagram explaining an operation of the transistor switch shown in Fig. 12;

Fig. 14 is a diagram showing speed-output characteristics of the induction motor shown in Fig. 12;

Fig. 15 is a diagram showing, by enlargement, an example of the state of winding in the stator windings of the induction motor shown in Fig. 12;

Fig. 16 is a diagram showing an example of the state of the real arrangement of the drive power source, the induction motor, and a transistor unit, all of which are used in the apparatus shown in Fig. 12; and

Fig. 17a and Fig. 17b are diagrams comparing the low speed torque of the induction motor shown in Fig. 12 to that of the conventional induction motor.

BEST MODE FOR CARRYING OUT THE INVENTION

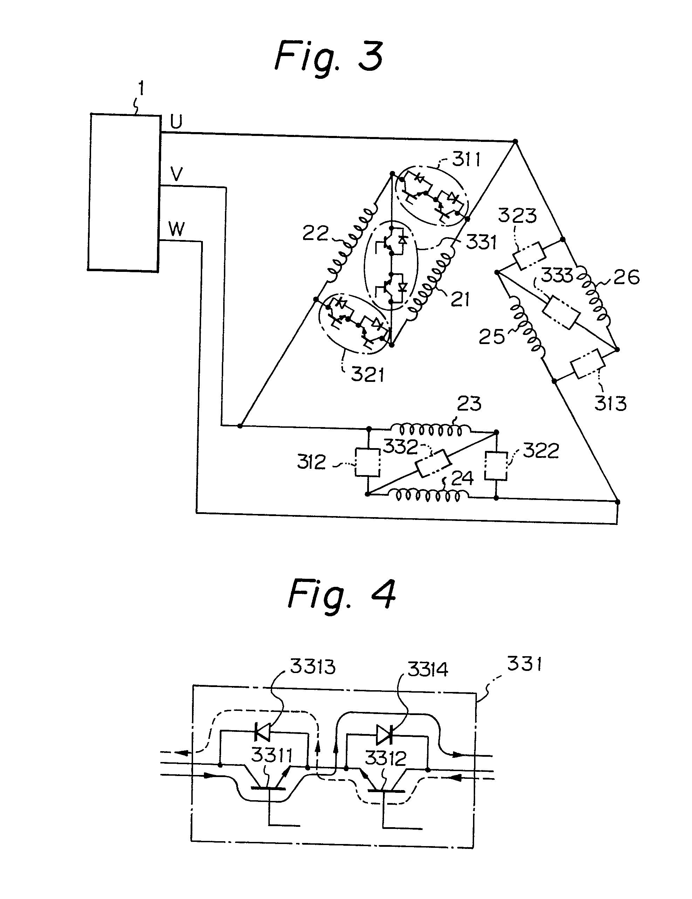

Figure 3 shows the connections between the stator windings of the motor and the transistor switches in a control apparatus for an induction motor according to an embodiment of the present invention. In the figure, 1 is the drive power source of variable frequency, constituted by an inverter or the like, and 21, 22; 23, 24; and 25, 26 are stator windings of the induction motor, two each provided for each phase, the number of turns of the windings being equal. Reference numerals 311, 321, 331; 312, 322, 332; and 313, 323, 333 are transistor switches, three each provided for each phase.

Among these, 311, 321; 312, 322; and 313, 323 are transistor switches for connecting in parallel the two stator windings provided for each phase to the drive power source. Reference numerals 331, 332, and 333 are transistor switches for connecting in series the two stator windings provided for each phase to the drive power source. Namely, 311, 321; 312, 322; and 313, 323 are transistor switches for parallel excitation, and 331, 332, and 333 are transistor switches for series excitation.

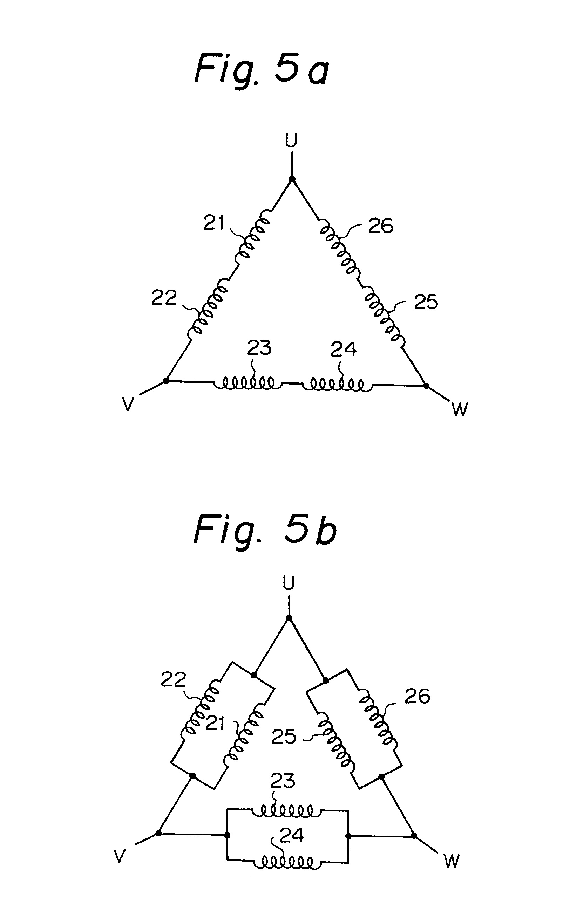

When the control signal applied to each transistor in the transistor switches for parallel excitation 311, 321; 312, 322; and 313, 323 is turned off and the control signal applied to each transistor in the transistor switches for series excitation 331, 332, and 333 is turned on, the two stator windings 21, 22; 23, 24; and 25, 26 for each phase are connected in series respectively, to form the state of series connection shown in Fig. 5a.

In this case, one transistor switch, for example, 331, comprises a pair of transistors 3311 and 3312, having emitters connected in common, and diodes 3313 and 3314, each of which diodes is connected in parallel to each of the pairs of the transistors. Thus, as shown in Fig. 4, when current flows from V side to U side, it flows along the solid line. When the current flows from the U side to V side, it flows along the dotted line.

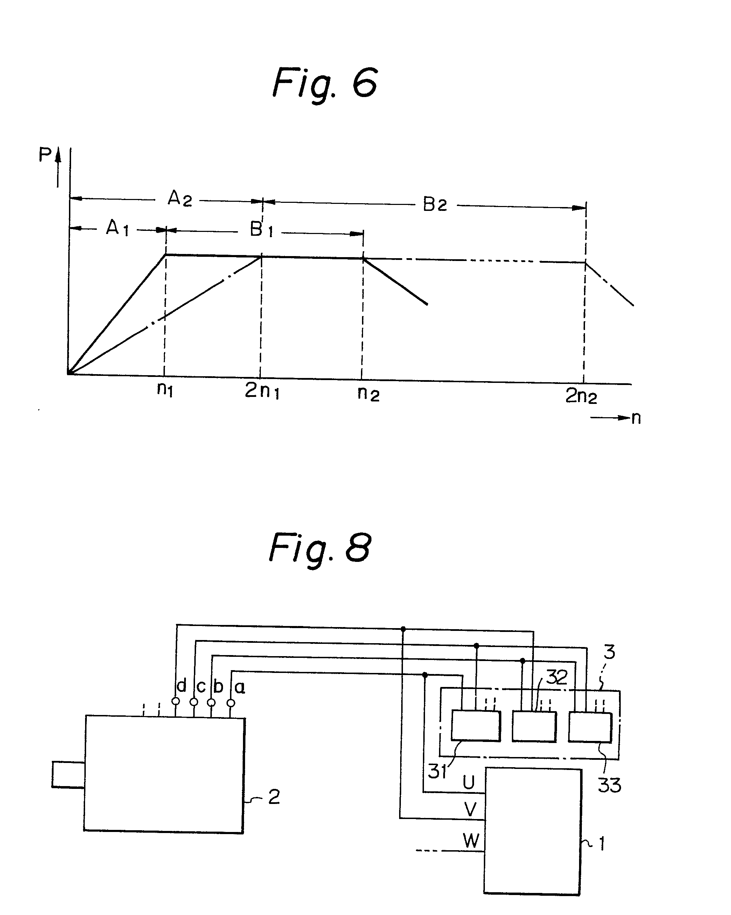

If the frequency of the drive power source is increased under such a state of the connection, in the range of $A_1$ the output P of the motor will increase roughly proportionally along with the gradual rise in the rotational speed of the motor, as shown by the solid line in Fig. 6. As a result, at the time that the value of the primary induced voltage $E_1$ of the motor defined by the equation $E_1 = 2.22K_1 \cdot f \cdot \phi \cdot N_1$ (where, $N_1$ is the number of series-connected conductors of the series-connected stator windings) reaches the terminal voltage applied to the motor (200 V, for example), the rotational speed $n_1$ of the motor becomes the above-mentioned base speed. Thus, constant output characteristics are obtained in region $B_1$ between the rotational speed $n_1$ and the rotational speed $n_2$ (the value $n_2$ is in the range of about between three and four times of $n_1$). Further, when the rotational speed exceeds the value $n_2$, the output of the motor begins to decrease.

Next, when the control signal applied to each transistor in the transistor switches for series excitation 331, 332, and 333 is turned off and the control signal applied to each transistor in the transistor switches for parallel excitation 311, 321; 312, 322; and 313, 323 is turned on, the two stator windings for each phase 21, 22; 23, 24; and 25, 26 are connected in parallel respectively, to form the state of parallel connection shown in Fig. 5b. In this case, the number of poles formed by the stator windings for each phase is equal to that in the above-mentioned series connection case.

If the frequency of the drive power source is raised under such a state of connection, in region $A_2$ the output P will increase roughly proportionally with the rotational speed of the motor, as shown by the chain-dotted line in Fig. 6.

As the number of series-connected conductors of the stator windings for each phase in the case of the above parallel connection is half (i.e., $N_1/2$) compared to that in the above-mentioned series-connection case, the frequency f at the time that the primary induced voltage $E_1$ reaches a predetermined terminal voltage (200 V, for example) doubles and, as a result, the rotational speed of the motor at that time, i.e., the base speed, becomes twice, i.e., $2n_1$ , that in the above-mentioned series-connection case. Thus, constant output characteristics are obtained in the region $B_2$ between the rotational speed $2n_1$ and the rotational speed $2n_2$. Only when the rotational speed exceeds the value $2n_2$ does the output of the motor begin to decrease.

Namely, in the induction motor shown in Fig. 3, when the stator windings are in the state of series-connection as shown in Fig. 5a, they function as so-called low-speed windings. On the other hand, when they are in the state of parallel connection as shown in Fig. 5b, they function as so-called high-speed windings. Therefore, the transistor switches are switched so as to be in the state of connection shown in Fig. 5a during low-speed operation and so as to be in the state of connection shown in Fig. 5b during high-speed operation.

In the apparatus of Fig. 3, as the number of turns in each of the stator windings 21, 22; 23, 24; and 25, 26 is made the same, circulating current does not flow between these windings even in the state of parallel connection as shown in Fig. 5b.

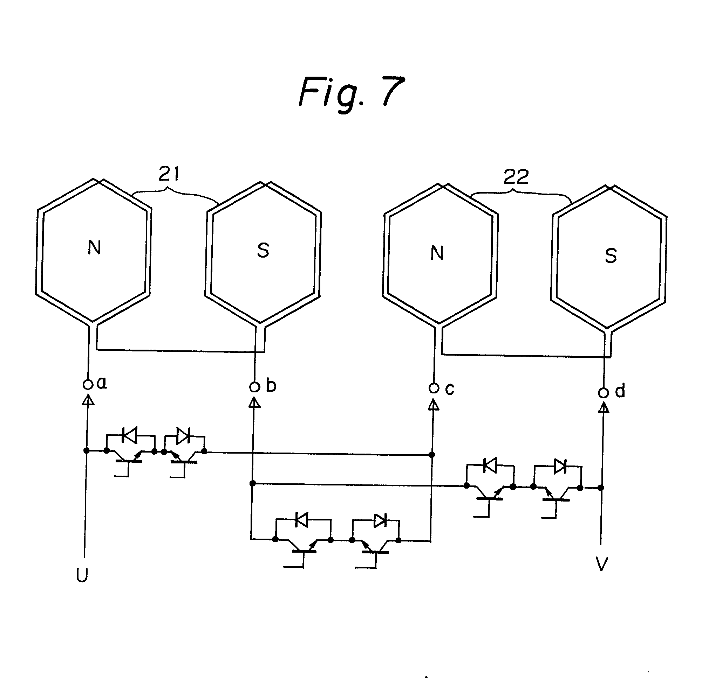

Figure 7 is an enlarged diagram showing an example of the state of winding in one phase's worth of stator windings, i.e., two stator windings 21 and 22. The terminals a, b and the terminals c, d are led out from the two ends of the stator windings 21 and 22, respectively. Transistor switches for parallel excitation 311 and 321 are connected between the terminals a and c and between the terminals b and d, respectively. The transistor switch for series excitation 311 is connected between the terminals b and c. In this case, as shown in the figure, the number of poles formed is the same both when the transistor switches 311 and 321 are turned on and the windings 21 and 22 are connected in parallel and when the transistor switch 331 is turned on and the windings 21 and 22 are connected in series. In the figure, the number of poles is four.

Each conductor comprising the stator windings is accommodated to fill the slots of the stator core. All of the conductors are utilized effectively both in the case of series connection and in the case of parallel connection. Therefore, it is possible to prevent the decrease of output which occurs when part of the conductors are not utilized in specific connection cases. In this connection, if part of the conductors accommodated in the slots of the stator core are not utilized in a specific connection case, the effective cross-sectional area of the conductor will decrease and its primary resistance $r_1$ will increase. As a result, the output will decrease (refer to above-mentioned equation concerning output P). However, according to the present invention, it is possible to prevent such a decrease of the output.

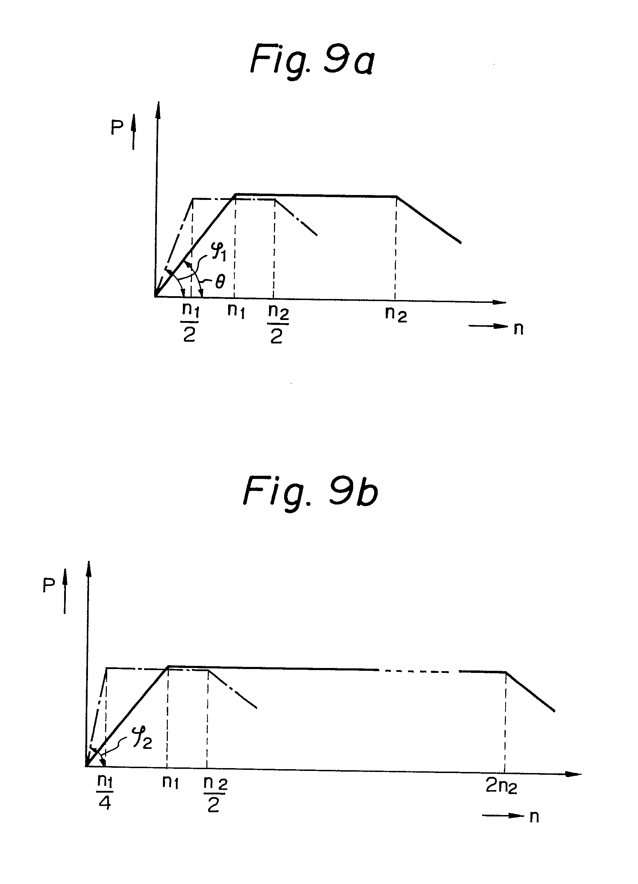

Figure 8 shows an example of the state of a real arrangement of a drive power source, induction motor, and transistor unit, all of which are used in the apparatus shown in Fig. 3. The drive power source 1 and the transistor unit 3 are constituted as a driving apparatus seemingly integral in appearance and are arranged apart from the induction motor 2. Four wirings are provided from the driving apparatus to the stator windings for each phase, for a total of 12 wirings. The transistor unit 3 comprises two groups of transistor switches for parallel excitation 31 and 32 and a group of the transistor switches for series excitation 33.

According to the apparatus shown in Fig. 3, it is possible not only to maintain high-speed operation but also to remarkably increase the low-speed torque by reducing the speed of the induction motor with gears or the like.

Explaining this using Fig. 9, Fig. 9a shows the speed-output characteristics of an induction motor in the prior art. The characteristics shown by the solid line correspond to the above-mentioned characteristics shown in Fig. 2.

If it is desired to further increase the low-speed torque of this induction motor (torque in region A in which the output increases proportionally in accordance with the increase of the rotational speed of the motor in the range between 0 and $n_1$) so as to drive at a low speed but high torque, it may be considered to reduce the rotational speed of the induction motor with gears or the like and to increase the angle of inclination of the above speed-output characteristics. The chain-dotted line in Fig. 9a shows the characteristics in the case in which the rotational speed of the induction motor is reduced to one half by gears or the like. As a result, the above-mentioned angle of inclination increases from $\theta$ to $\mathcal{S}_1$. The low speed torque increases in accordance with the increase of this angle of inclination.

On the other hand, Fig. 9b shows the speed-output characteristics of the induction motor according to the apparatus shown in Fig. 3. The characteristics shown by the solid line correspond to the above-mentioned characteristics shown in Fig. 6.

Now, if the speed of the induction motor is reduced by gears or the like in order to increase the low-speed torque, if the speed is reduced until the maximum speed (the speed at which the output P begins to decrease) becomes equal to the maximum speed as shown in the chain-dotted line in Fig. 9a (i.e., $n_2/2$), the angle of inclination $\mathcal{S}_2$ of the above speed-output power characteristics will clearly become larger than the above-mentioned angle $\mathcal{S}_1$ and the low-speed torque will further increase by the increase of the above angle of inclination.

Therefore, according to the apparatus shown in Fig. 3, it is possible to enlarge the region of the motor speed in which constant output characteristics can be obtained, by changing the number of series-connected conductors of the stator windings of the motor, and to drive the motor until the motor speed reaches the desired high speed region.

Also, according to the apparatus shown in Fig. 3, it is possible to effectively utilize all of the stator windings irrespective of the state of the connection, so as to prevent the fall of the output characteristic.

Further, according to the apparatus shown in Fig. 3, it is possible to increase the low-speed torque remarkably when reducing the speed of the induction motor by gears or the like to increase the low-speed torque.

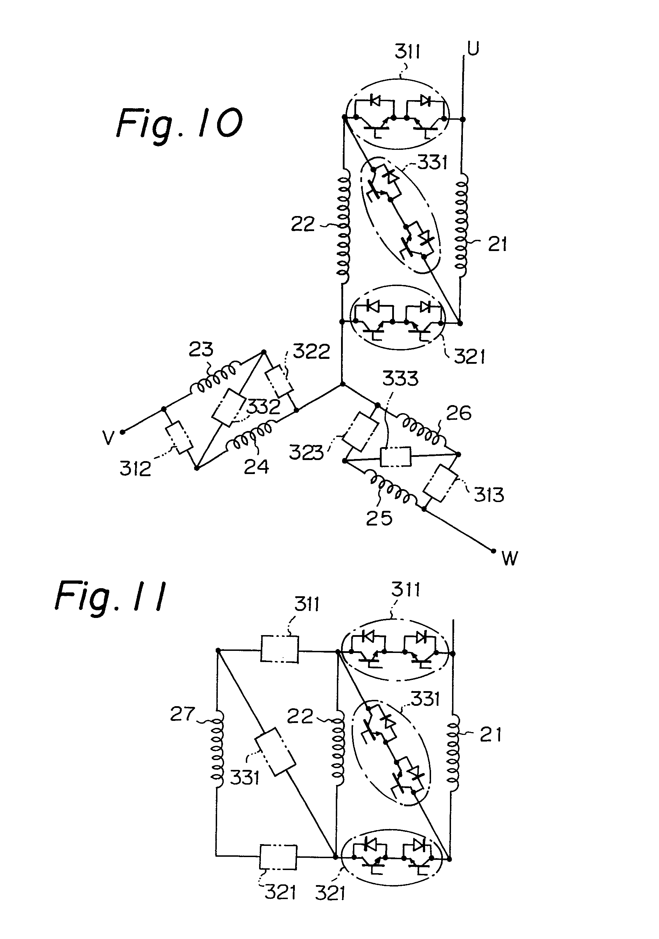

Figure 10 shows a modified example of the apparatus shown in Fig. 3, wherein the stator windings of the induction motor are connected in a star-configuration. The operation of the transistor switches is the same as that in the apparatus in Fig. 3.

Figure 11 shows another modified example of the apparatus shown in Fig. 3, wherein three stator windings 21, 22, and 27 are provided for each phase of the induction motor, respectively. In the case of series connection, the transistor switch 331 is turned on, and the three stator windings are connected in series to function as so-called low-speed windings. On the other hand, in the case of parallel connection, the transistor switches 311 and 321 are turned on, and the three stator windings are connected in parallel to function as so-called high-speed windings.

In the apparatus shown in Fig. 11, the number of series-connected conductors of the stator windings for each phase, in the parallel-connection case, becomes one-third that in the series-connection case. Therefore, the base speed in the parallel connection case becomes three times (i.e., $3n_1$) that in the series-connection case. As a result, the limit of the region $B_2$ in Fig. 6 moves further to the right side, i.e., to the high-speed side, and, therefore, it is possible to drive the motor in a further high speed region.

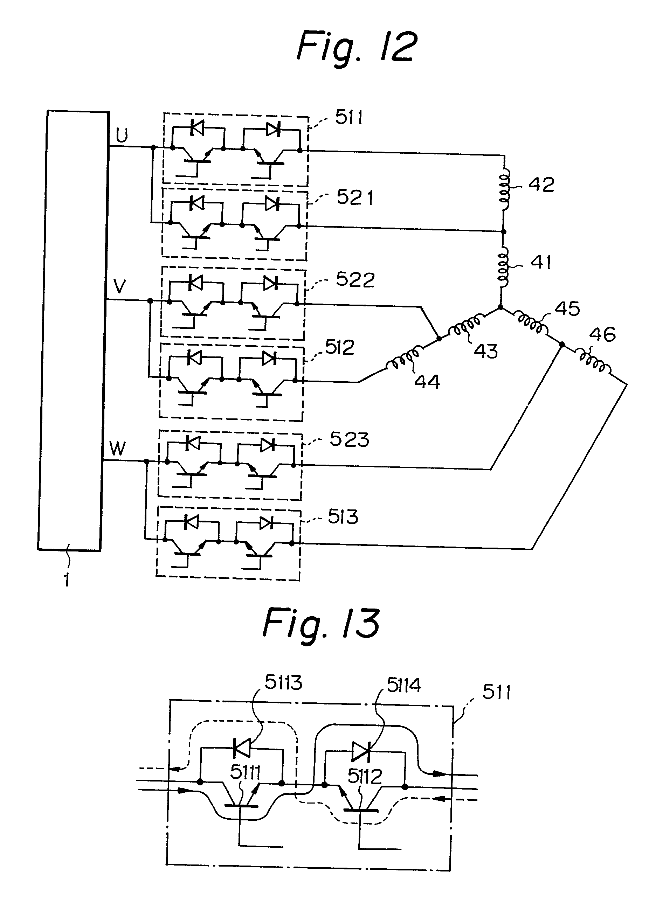

Figure 12 shows the connections between the stator windings of the motor and the transistor switches in the control apparatus for the induction motor according to another embodiment of the present invention. In the figure, 1 is the variable frequency drive power source, constituted by an inverter or the like, and 41, 42; 43, 44; and 45, 46 are stator windings of the induction motor, two each provided connected in series for each phase. Reference numerals 511, 521; 512, 522; and 513, 523 are transistor switches, two each provided for each phase. Among these, 511, 512, and 513 are transistor switches for connecting the two series-connected stator windings for each phase to the drive power source, and 521, 522, and 523 are transistor switches for opening the stator windings 42, 44, and 46, each of which is one of the two stator windings for each phase (at this time, the transistor switches 511, 512, and 513 are turned off) and for connecting directly the remaining stator windings 41, 43, and 45 to the drive power source. Namely, 511, 512, and 513 are transistor switches for exciting all of the windings, and 521, 522, and 523 are transistor switches for exciting a part of the windings.

When the control signal applied to each transistor in the transistor switches for exciting a part of the windings 521, 522, and 523 is turned off and the control signal applied to each transistor in the transistor switches for exciting all of the windings 511, 512, and 513 is turned on, the series-connected stator winding pairs for each phase are connected to each of the output terminals U, V, and W of the drive power source.

In this case, one transistor switch, for example, 311, comprises a pair of transistors 5111 and 5112, having emitters connected in common and diodes 5113 and 5114, each of which is connected in parallel to each of the pair of transistors.

Thus, as shown in Fig. 13, when the current flows from the U side to V-side, it flows along the solid line. When the current flows from the V side to U side, it flows along the dotted line.

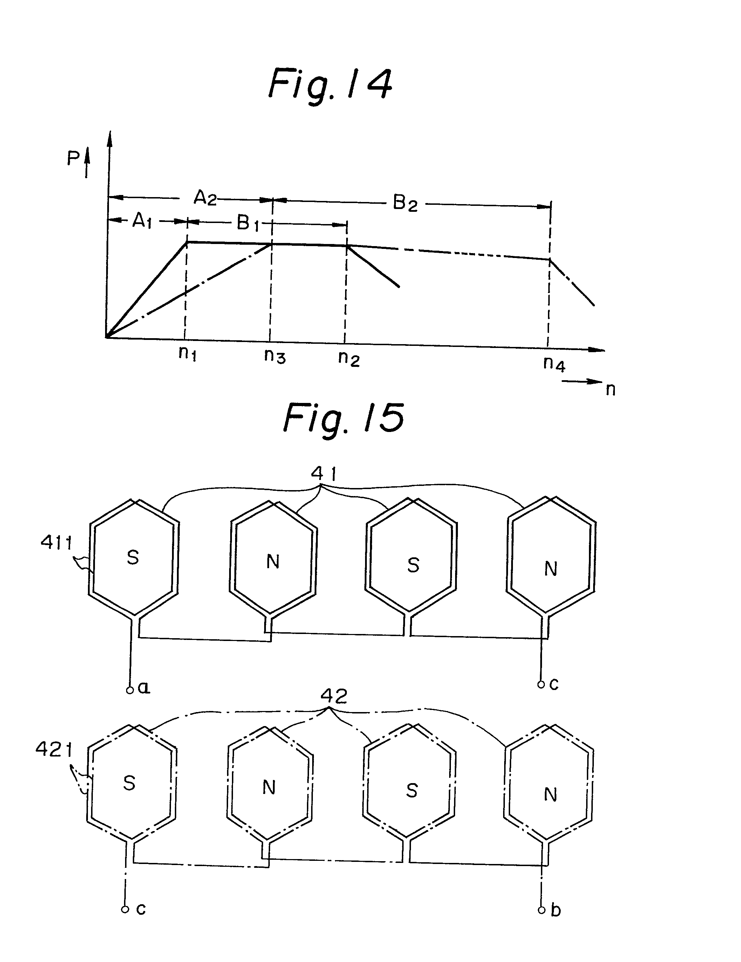

If the frequency of the drive power source increases under such a state of connection, in region $A_1$, the output P will increase proportionally in accordance with the increase of the rotational speed of the motor, as shown by the solid line in Fig. 14.

As a result, at the time that the value of the primary induced voltage $E_1$ of the motor, defined by the equation $E_1 = 2.22K_1 \cdot f \cdot \phi \cdot N$ (where, N is the number of series-connected conductors of the stator windings which are in the state of above series connection) reaches the terminal voltage applied to the motor (200 V, for example), the rotational speed $n_1$ becomes the above-mentioned base speed. Thus, constant output characteristics of the motor are obtained in region $B_1$ between the rotational speed $n_1$ and the rotational speed $n_2$ (the value $n_2$ is in the range of about between three and four times of $n_1$). Further, when the rotational speed exceeds the value $n_2$, the output of the motor begins to decrease.

Next, when the control signal applied to each transistor in the transistor switches for exciting all of the windings 511, 512, and 513 is turned off and the control signal applied to each transistor in the transistor switches for exciting a part of the windings is turned on, the stator windings 42, 44, and 46, each of which is provided for each phase, are opened, and each of the remaining stator windings 41, 43, and 45 are connected to the drive power source directly. In this case, the number of poles formed by the stator windings for each phase is equal to that formed when the two series-connected stator windings for each phase are connected to the drive power source, i.e., when all of the windings are connected to the drive power source.

If the frequency of the drive power source is increased under such a state of connection, in the region $A_2$, the output P of the motor will increase proportionally in accordance with the increase of the rotational speed of the motor, as shown by the chain-dotted line in Fig. 14.

As, in this case, the number of series-connected conductors of the stator windings for each phase is $N_1$, the frequency f at the time that the primary induced voltage $E_1$ of the motor reaches the predetermined terminal voltage (200 V, for example) becomes $(N_1 + N_2)/N_1$ times, (where, $N_1$ is the number of series-connected conductors of each of the stator windings 41, 43, and 45, and $N_2$ is the number of series-connected conductors of each of the stator windings 42, 44, and 46), compared to the frequency in the case in which the two series-connected stator windings for each phase are connected to the drive power source, as they are. As a result, the rotational speed $n_3$ of the motor at that time, i.e., the base speed becomes $(N_1 + N_2)/N_1 \times n_1$. Thus, only a relatively little fall of the output occurs in region $B_2$ between the rotational speed $n_3$ and the rotational speed $n_4$ (the value $n_4$ is generally three to four times $n_3$). Only when the rotational speed exceeds the value $n_4$ does the output of the motor begin to decrease remarkably.

Namely, in the induction motor shown in Fig 12, when the two series-connected stator windings for each phase 41, 42; 43, 44; and 45, 46 are connected to the drive power source, as they are, i.e., when all of the windings are excited, the stator windings function as so-called low-speed windings. Conversely, when only the stator windings 41, 43, and 45 are connected to the drive power source directly i.e., when only part of the windings are excited, the stator windings function as so-called high-speed windings. Therefore, the transistor switches are switched so as to be in the former connection during low-speed operation and so as to be in the latter connection during high-speed operation.

As, in this case both the number of series-connected conductors $N_1$ of each of the stator windings 41, 43, and 45 and number of series-connected conductors $N_2$ of each of the stator windings 42, 44, and 46 can be set to any value, it is possible to set any ratio between the base speed in the case wherein the windings are formed as high-speed windings and the base speed in the case wherein the windings are formed as low-speed windings.

Figure 15 is a diagram showing, by enlargement, an example of the state of winding in two series-connected stator windings 41 and 42. A terminal a is a neutral point of the star connection, and the two stator windings are connected in series at a terminal C. A group of conductors 411 constituting the stator winding 41 and a group of conductors 421 constituting the stator winding 42, for example are received in the same slot of the stator core. Thus, the number of poles formed when the two stator windings 41 and 42 are excited is equal to that formed when only the stator winding 41 is excited. The number of poles is four in the case shown in Fig. 15.

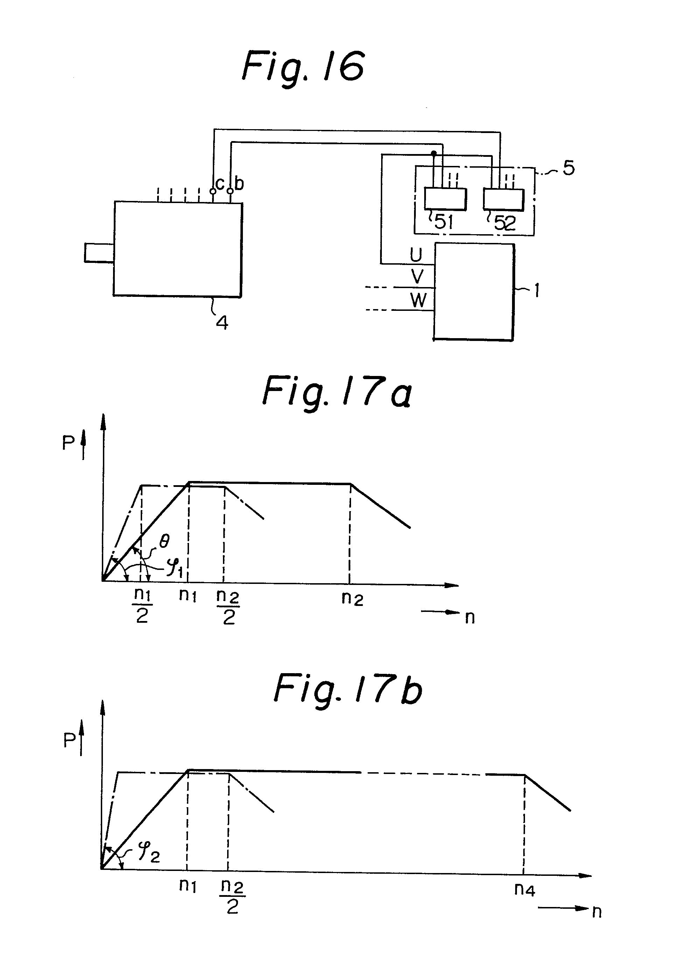

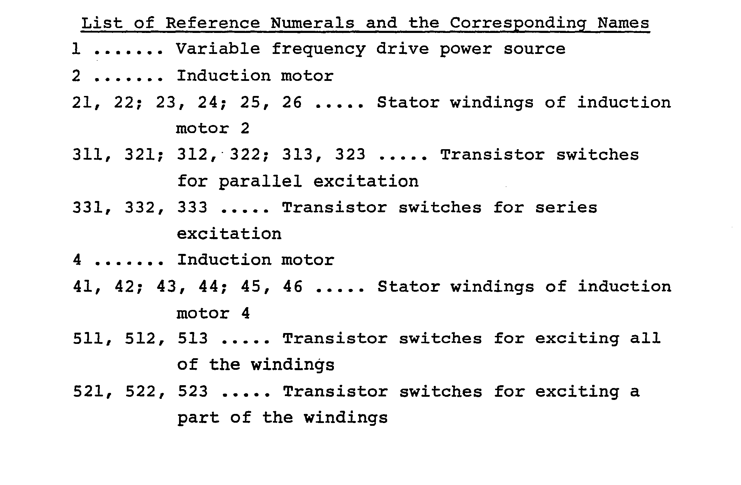

Figure 16 shows an example of the state of the real arrangement of the drive power source, the induction motor, and a transistor unit, all of which are used in the apparatus shown in Fig. 12. The drive power source 1 and the transistor unit 5 are constituted as a driving apparatus seemingly integral in appearance and are arranged apart from the induction motor 4. Two wirings are provided from the driving apparatus to the stator windings for each phase, for a total of six wirings. The transistor unit 5 comprises a group of the transistor switches for exciting all of the windings 51 and a group of the transistor switches for exciting a part of the windings 52.

In the apparatus shown in Fig. 12, too, it is possible not only to maintain high-speed operation but also to increase the low-speed torque remarkably, by reducing the speed of the induction motor with gears or the like.

Explaining this using Fig. 17, Fig. 17a shows the speed-output characteristics of the induction motor in the prior art. The characteristics shown by the solid line correspond to the above-mentioned characteristics shown in Fig. 2.

If it is desired to further increase the low-speed torque of this induction motor (torque in region A in which the output of the motor increases proportionally in accordance with the increase of the rotational speed of the motor in the range between 0 and $n_1$) and to drive the motor at low-speed but high torque, it may be considered to reduce the rotational speed of the induction motor with gears or the like and to increase the angle of inclination of the above speed-output characteristics. The chain-dotted line in Fig. 17a shows the characteristics in the case in which the rotational speed of the induction motor is reduced to one-half by gears or the like. As a result, the above-mentioned angle of inclination increases from $\theta$ to $\mathcal{Y}_1$. The low-speed torque also increases in accordance with the increase of this angle of inclination.

On the other hand, Fig. 17b shows the speed-output characteristics of the induction motor according to the apparatus shown in Fig. 12. The characteristics shown by the solid line correspond to the above-mentioned characteristics shown in Fig. 14.

Now, if the speed of the induction motor is reduced by gears or the like in order to increase the low-speed torque, if the speed is reduced until the maximum speed (the speed at which the output P begins to decrease) becomes the maximum speed as shown by the chain-dotted line in Fig. 17a (i.e., $n_2/2$), the angle of inclination

$\mathcal{S}_2$ of the above speed-output characteristics will clearly become larger than the above-mentioned angle $\mathcal{S}_1$ , and the low-speed torque will further increase by the increase of the above angle of inclination.

Although in the apparatus shown in Fig. 12, the stator windings for each phase are connected in a star-configuration, it is obvious that these stator windings may be connected in a delta configuration. Also, the number of poles of the stator windings is not limited only to four: the number may be set to any value.

Therefore, according to the apparatus shown in Fig. 12, it is possible to set the base speed in the above-mentioned speed-output power characteristics to any value, by changing the number of series-connected conductors of the stator windings of the induction motor with any ratio, and to drive the motor until the motor speed reaches the predetermined high-speed region.

Further, according to the apparatus shown in Fig. 12, it is possible to increase the low-speed torque remarkably, when reducing the speed of the induction motor by gears or the like to increase the low-speed torque.

CLAIMS

1. A control apparatus for an induction motor, characterized by comprising:

a variable frequency drive power source; an induction motor having a plurality of stator windings provided for each phase; and semiconductor switches for switching the connections between said plurality of stator windings provided for each phase of said motor; the number of series-connected conductors of said stator windings for each phase being able to be switched by said semiconductor switches.

2. A control apparatus for an induction motor, characterized by comprising:

a variable frequency drive power source; an induction motor having a plurality of stator windings of the same number of turns provided for each phase, transistor switches for parallel excitation for connecting in parallel said plurality of stator windings to said drive power source, and transistor switches for series excitation for connecting in series said plurality of stator windings to said drive power source without changing the number of poles in the above-mentioned parallel connection case, said transistor switches for parallel excitation and said transistor switches for series excitation being selectively switched.

3. A control apparatus for an induction motor according to claim 2, wherein each of said transistor switches comprises a pair of transistors, having emitters connected in common, and diodes, each of which is connected in parallel with each of said pair of transistors.

4. A control apparatus for an induction motor according to claim 2, wherein speed reducing means constituted by gears or the like are provided in said induction motor.

5. A control apparatus for an induction motor, characterized by comprising:

A variable frequency drive power source;

an induction motor having a plurality of series-connected stator windings for each phase, transistor switches for exciting all of the windings for connecting said plurality of series-connected stator windings to said drive power source, and transistor switches for exciting a part of the windings for connecting directly only a part of said plurality of stator windings to said drive power source without changing the number of poles in the above-mentioned excitation case for all of the windings, said transistor switches for exciting all of the windings and said transistor switches for exciting a part of the windings being selectively switched.

6.    A control apparatus for an induction motor according to claim 5, wherein each of said transistor switches comprises a pair of transistors, having emitters connected in common, and diodes, each of which is connected in parallel with each of said pair of transistors.

7.    A control apparatus for an induction motor according to claim 5, wherein speed reducing means constituted by gears or the like are provided in said induction motor.

1/

Fig. 1

Fig. 2

## Fig. 3

## Fig. 4

0181938

3/

Fig. 5a

Fig. 5b

0181938

4/

*Fig. 6*

*Fig. 8*

5/

Fig. 7

## Fig. 9a

## Fig. 9b

*Fig. 10*

*Fig. 11*

## Fig. 12

## Fig. 13

9/

*Fig. 14*

*Fig. 15*

# Fig. 16

# Fig. 17a

# Fig. 17b

0181938

- 11 -

List of Reference Numerals and the Corresponding Names

1 ....... Variable frequency drive power source

2 ....... Induction motor

21, 22; 23, 24; 25, 26 ..... Stator windings of induction
        motor 2

311, 321; 312, 322; 313, 323 ..... Transistor switches
        for parallel excitation

331, 332, 333 ..... Transistor switches for series
        excitation

4 ....... Induction motor

41, 42; 43, 44; 45, 46 ..... Stator windings of induction
        motor 4

511, 512, 513 ..... Transistor switches for exciting all
        of the windings

521, 522, 523 ..... Transistor switches for exciting a
        part of the windings

# INTERNATIONAL SEARCH REPORT

International Application No. PCT/JP85/00201

## I. CLASSIFICATION OF SUBJECT MATTER (if several classification symbols apply, indicate all) [3]

According to International Patent Classification (IPC) or to both National Classification and IPC

Int. Cl$^4$ H02P7/36, 7/63

## II. FIELDS SEARCHED

| Minimum Documentation Searched [4] | |
|---|---|
| Classification System | Classification Symbols |
| IPC | H02P7/36-7/632 |

Documentation Searched other than Minimum Documentation
to the Extent that such Documents are Included in the Fields Searched [5]

| | |
|---|---|
| Jitsuyo Shinan Koho | 1926 – 1985 |
| Kokai Jitsuyo Shinan Koho | 1971 – 1985 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| X | JP, U, 48-44402 (Mitsubishi Electric Corp.), 9 June 1973 (09. 06. 73), (Family : none) | 1, 2, 5 |
| X | JP, A, 56-71122 (Nippon Electric Co., Ltd.), 13 June 1981 (13. 06. 81), Column 3, lines 2 to 6 (Family : none) | 3, 6 |
| X | JP, U, 48-34809 (Seikosha Kabushiki Kaisha), 26 April 1973 (26. 04. 73), (Family : none) | 4, 7 |

* Special categories of cited documents: [16]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search [2] | Date of Mailing of this International Search Report [2] |
|---|---|
| June 27, 1985 (27. 06. 85) | July 8, 1985 (08. 07. 85) |
| International Searching Authority [1] | Signature of Authorized Officer [20] |
| Japanese Patent Office | |

Form PCT/ISA/210 (second sheet) (October 1981)